# FASCICULE DE BREVET EUROPEEN

(11) **EP 2 641 323 B1**
(45) Date de publication et mention de la délivrance du brevet: **21.02.2018**
(21) Numéro de dépôt: 11772984.8
(22) Date de dépôt: 21.10.2011
(51) Int. Cl.: H02P 27/06, H02J 7/00, H02M 7/00

(54) **VARIATEUR DE VITESSE DOTE D'UN MODULE A SUPER-CONDENSATEURS**
DREHZAHLVARIABLER ANTRIEB MIT SUPERKONDENSATORMODUL
VARIABLE-SPEED DRIVE PROVIDED WITH A SUPERCAPACITOR MODULE

(30) Priorité: 15.11.2010 FR 1059357
(43) Date de publication de la demande: 25.09.2013
(73) Titulaire: Schneider Toshiba Inverter Europe SAS, 27120 Pacy sur Eure (FR)
(72) Inventeur: BARAUNA, Allan Pierre, F-27200 Vernon (FR)
(74) Mandataire: Dufresne, Thierry
(86) Numéro de dépôt international: PCT/EP2011/068452
(87) Numéro de publication internationale: WO 2012/065806

(56) Documents cités:
- WO-A1-2007/044000
- Rockwell Automation: "Chapter 7- PowerFlex® AC Drives inCommon Bus Configurations", , 1 décembre 2009 (2009-12-01), pages 7-1-7-4, XP002656491, Extrait de l'Internet: URL:http://www.efesotomasyon.com/html/Alle n_Bradley_rockwell/PowerFlex%20AC%20Drives %20in%20Common%20Bus%20Configurations%20.p df [extrait le 2011-08-08]
- Anonymous: "SUPER CAPACITOR MODULE (SCM)", MSc Electronics Oy , 8 avril 2010 (2010-04-08), XP002656492, Extrait de l'Internet: URL:http://www.msc.eu/msc_electronics/uplo aded/files/Super_Capacitor_Module__SCM__Da ta_Sheet.pdf [extrait le 2011-08-08]
- Anonymous: "ABB Low Voltage Drives - Powerohm Resistors Inc. - Price List", ABB , 15 janvier 2010 (2010-01-15), pages 1-28, XP002656493, Extrait de l'Internet: URL:http://www.powerohm.com/pdfs/ABB_book. pdf [extrait le 2011-08-08]

## Description

La présente invention se rapporte à un variateur de vitesse comportant des moyens de stockage et de régénération de l'énergie électrique générée lors d'un freinage de la charge électrique. Ces moyens de stockage et de régénération comportent par exemple un ou plusieurs super-condensateurs, appelés également super-capacités ou ultra-capacités.

De manière connue, un variateur de vitesse est connecté au réseau électrique d'alimentation et destiné à commander une charge électrique. Il comporte en entrée un module redresseur de tension qui génère une tension continue à partir d'une tension alternative fournie par le réseau et qui alimente en aval un bus continu d'alimentation doté d'une ligne positive et d'une ligne négative. Un condensateur de filtrage, appelé communément condensateur de bus, est monté entre une ligne positive et une ligne négative du bus continu. En sortie, le variateur comporte un module onduleur alimenté par le bus continu, permettant de générer, à partir de la tension continue, une tension variable qui peut être d'amplitude et de fréquence variables en utilisant des interrupteurs électroniques par exemple de type transistors IGBT commandés par Modulation à Largeur d'Impulsions (MLI ou PWM).

Il est connu du document US 6,742,630 un dispositif implanté dans un variateur de vitesse pour récupérer l'énergie de freinage d'installations de type ascenseur ou levage. Ce type de dispositif est composé d'une unité de stockage d'énergie formée de super-condensateurs et d'un régulateur d'énergie capable d'ajuster le flux d'énergie entre les différents niveaux de tension du bus continu et de l'unité de stockage et de charger l'unité de stockage à partir du surplus d'énergie. Lorsque la demande en énergie de la charge est importante, les super-condensateurs sont déchargés dans le bus continu.

Par ailleurs il est connu du brevet EP2131483 un variateur de vitesse connecté à une charge électrique, comportant des moyens de stockage et de régénération de l'énergie électrique générée lors du freinage de la charge, ces moyens de stockage comportant un ou plusieurs super-condensateurs. Dans ce variateur, un convertisseur continu/continu est ainsi commandé pour gérer la charge et la décharge du super-condensateur. Le convertisseur continu/continu est connecté en amont et en parallèle du condensateur de bus et permet par ailleurs de contrôler le courant circulant sur le bus et donc de limiter le THDi ("Total Harmonic Distortion of Current") en entrée du variateur. Le document Rockwell Automation: "PowerFlex AC Drives in Common Bus Configurations" divulge aussi un variateur de vitesse. Ces variateurs de l'état de la technique sont configurés définitivement lors de la fabrication et comportent nécessairement la fonction de stockage et de régénération d'énergie électrique sur le bus continu d'alimentation. Cependant, un utilisateur peut tout à fait être amené à ne pas désirer cette fonction et à n'employer qu'une simple résistance de freinage destinée à dissiper l'énergie générée lors du freinage de la charge.

Le but de l'invention est de proposer un variateur de vitesse dans lequel l'utilisateur peut choisir s'il souhaite une résistance de freinage ou une fonction de stockage et de régénération d'énergie, sans ajouter de coût supplémentaire au produit.

Ce but est atteint par un variateur de vitesse comportant :
- un bus continu d'alimentation de puissance doté d'une ligne positive et d'une ligne négative,
- un condensateur de bus connecté entre la ligne positive et la ligne négative du bus continu d'alimentation,
- un module onduleur alimenté par le bus continu d'alimentation et commandé pour délivrer une tension variable à une charge électrique (C),
- un premier bras de commutation connecté entre la ligne positive et la ligne négative du bus et comportant au moins un premier interrupteur électronique,
ledit variateur comportant également :
- un premier module comportant une résistance de freinage ou un deuxième module comportant des moyens de stockage et de régénération de l'énergie électrique générée lors du freinage de la charge électrique,
- le premier module et le deuxième module étant amovibles et interchangeables,
- le premier module et le deuxième module se présentant sous la forme d'une cassette venant se connecter d'une part sur le bus continu d'alimentation et d'autre part sur le premier bras de commutation.

Selon une particularité, le premier bras de commutation comporte une diode montée en série avec le premier interrupteur électronique et définissant entre eux un point milieu de connexion.

Selon une autre particularité, le deuxième module comporte un deuxième bras de commutation et un ou plusieurs super-condensateur(s).

Selon une autre particularité, le deuxième bras de commutation est connecté en parallèle du premier bras de commutation.

Selon une autre particularité, le deuxième bras de commutation comporte un deuxième interrupteur électronique et une diode connectés en série et définissant un point milieu de connexion connecté au point milieu de connexion du premier bras de commutation, ladite diode du deuxième bras de commutation étant connectée en antiparallèle avec le premier interrupteur électronique et la diode du premier bras de commutation étant connectée en antiparallèle du deuxième interrupteur électronique.

Selon une autre particularité, le deuxième module comporte une inductance connectée en série avec le super-condensateur.

Selon une autre particularité, la résistance de freinage du premier module est connectée en parallèle de la diode du premier bras de commutation.

Selon une autre particularité, le variateur de vitesse comporte des moyens de commande agencés pour fonctionner différemment selon que le premier module ou le deuxième module est connecté.

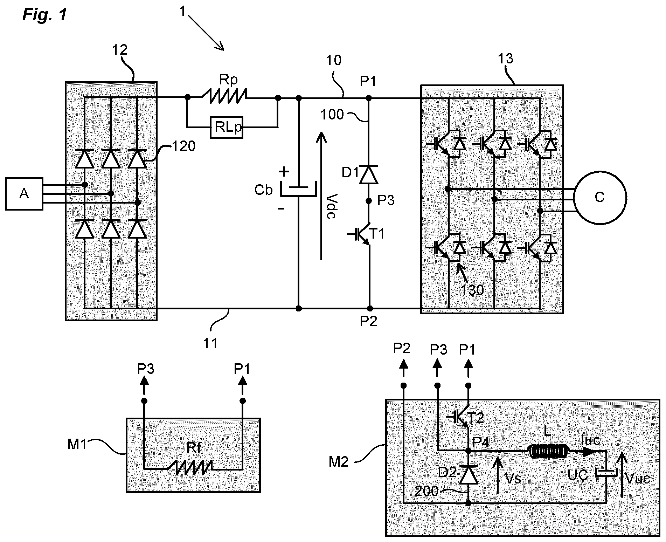

D'autres caractéristiques et avantages vont apparaître dans la description détaillée qui suit en se référant à un mode de réalisation donné à titre d'exemple et représenté par la figure 1 annexée représentant schématiquement un variateur de vitesse selon l'invention.

En référence à la figure 1, un variateur de vitesse 1 comporte en entrée un module redresseur 12 qui est destiné à redresser une tension alternative, par exemple triphasée, provenant d'un réseau d'alimentation extérieur A (par exemple un réseau électrique triphasé 380Vac). Ce module redresseur 12 utilise avantageusement des diodes 120 qui sont plus économiques et plus fiables que des thyristors. Cette tension redressée peut être filtrée pour obtenir une tension continue Vdc (par exemple de l'ordre de 200 à 800Vcc ou plus, suivant les conditions d'utilisation) appliquée sur un bus continu d'alimentation de puissance composé d'une ligne positive 10 et d'une ligne négative 11. Un condensateur de bus Cb est habituellement utilisé pour maintenir constante la tension Vdc du bus continu. Ce condensateur de bus Cb est connecté entre la ligne positive 10 et la ligne négative 11 du bus et, dans les variateurs standards, il est généralement de type électrolytique.

Le variateur de vitesse 1 comporte en sortie un module onduleur 13 permettant, à partir du bus continu, de commander une charge électrique C avec une tension variable qui peut être d'amplitude et de fréquence variables. Le module onduleur 13 utilise pour cela une commande par Modulation à Largeur d'Impulsions (MLI ou PWM) pour commander des interrupteurs électroniques de puissance 130 montés sur chaque phase. Ces interrupteurs sont des transistors de puissance, par exemple de type IGBT, commandés par une unité de commande (non représentée) réalisant la MLI. Sur la figure 1, le module onduleur 13 comporte trois bras pour délivrer une tension variable triphasée à la charge électrique C, chaque bras étant doté de deux transistors de puissance 130 en série entre une borne positive et une borne négative du bus de puissance, soit un total de six transistors de puissance.

En règle générale, un variateur de vitesse à redresseur non réversible comporte également un circuit de précharge composé d'une résistance de précharge Rp et d'un relais de précharge RLp connecté sur la ligne positive 10 du bus continu d'alimentation ou directement en série avec le condensateur de bus Cb.

Par ailleurs, un variateur de vitesse 1 peut comporter une résistance de freinage Rf destinée à dissiper l'énergie générée lors du freinage de la charge électrique ou des moyens de stockage et de régénération de l'énergie électrique générée lors du freinage de la charge électrique C. Les moyens de stockage et de régénération de l'énergie électrique peuvent alors comporter un ou plusieurs condensateur(s), plus particulièrement du type super-condensateur(s) UC (appelé également super-capacité ou ultra-capacité). Un super-condensateur UC se comporte comme une batterie électrochimique en ce qu'il est capable de stocker un volume d'énergie électrique plus important qu'un condensateur standard, mais contrairement à une batterie électrochimique, il se comporte comme un condensateur standard en ce qu'il est capable de supporter de forts courants de charge et de décharge.

L'emploi d'une résistance de freinage Rf ou de moyens de stockage et de régénération de l'énergie électrique nécessite la présence d'un premier bras de commutation 100 connecté entre la ligne positive 10 et la ligne négative 11 du bus continu d'alimentation, en parallèle du condensateur de bus Cb et en aval de celui-ci. Ce premier bras de commutation 100 comporte au moins un premier interrupteur électronique T1 commandé, tel que par exemple un transistor de type IGBT, et par exemple une diode D1 connectée en série avec l'interrupteur électronique T1.

L'objectif de l'invention est donc de pouvoir utiliser cette partie commune constituée par ce premier bras de commutation 100 et de proposer d'y connecter un premier module M1 comportant une résistance de freinage Rf ou un deuxième module M2 comportant des moyens de stockage et de régénération de l'énergie électrique générée lors du freinage de la charge électrique. Selon l'invention, comme le module M1, M2 est amovible, l'utilisateur peut choisir d'employer une résistance de freinage Rf ou des moyens de stockage et de régénération de l'énergie électrique générée lors du freinage de la charge électrique.

Selon l'invention, le variateur comporte ainsi un emplacement dédié destiné à connecter le premier module M1 ou le deuxième module M2 au premier bras de commutation 100. Cet emplacement comporte un premier point de connexion P1 sur la ligne positive 10 du bus continu d'alimentation, un deuxième point de connexion P2 sur la ligne négative 11 du bus continu d'alimentation, et un troisième point de connexion P3 sur le point milieu situé entre la diode D1 et l'interrupteur électronique T1 du premier bras de commutation 100.

Selon l'invention, le premier module M1 comporte un boîtier ou cassette renfermant une résistance de freinage Rf destinée à dissiper l'énergie électrique générée lors du freinage de la charge électrique. Lorsqu'il est en place, le premier module M1 vient se connecter sur le troisième point de connexion P3 et sur le premier point de connexion P1 (en parallèle de la diode D1).

Selon l'invention, le deuxième module M2 comporte un boîtier ou cassette, préférentiellement de forme identique à la cassette du premier module, renfermant un deuxième bras de commutation 200 et des moyens de stockage de l'énergie électrique composés d'au moins un super-condensateur UC. Le second bras de commutation 200 comporte au moins un deuxième interrupteur électronique T2, tel que par exemple un transistor de type IGBT, et par exemple une diode D2 connectée en série avec le deuxième interrupteur électronique T2. Le deuxième module M2 comporte également une inductance L connectée en série avec le super-condensateur UC, l'ensemble composé de cette inductance L et du super-condensateur UC étant connecté en parallèle de la diode D2 ou du deuxième interrupteur électronique T2 du deuxième bras de commutation 200. Lorsque le deuxième module M2 est connecté au variateur de vitesse 1, le point milieu de connexion P4 situé entre l'interrupteur électronique T2 et la diode D2 du deuxième bras de commutation 200 est connecté au troisième point de connexion P3 et le deuxième bras de commutation 200 est connecté d'une part sur le premier point de connexion P1 et d'autre part sur le deuxième point de connexion P2. De cette manière, la diode D2 se trouve connectée en antiparallèle du premier interrupteur électronique T1 et la diode D1 se trouve connectée en antiparallèle du deuxième interrupteur électronique T2.

Selon l'invention, chaque module se présente par exemple sous la forme d'une cassette amovible identique destinée à venir se connecter sur le variateur de vitesse.

Selon l'invention, le variateur comporte les moyens de commande permettant de commander chaque interrupteur électronique T1, T2 employé, selon que le premier module M1 ou le deuxième module M2 est connecté.

Lorsque le deuxième module est connecté, les moyens de commande peuvent être communs aux deux interrupteurs T1, T2 employés. Dans ce cas, ils seront par exemple localisés dans le deuxième module M2. En variante, les moyens de commande peuvent comporter un circuit de commande distinct pour chaque interrupteur T1, T2, l'un dédié à l'interrupteur T1 étant situé dans le variateur et l'autre dédié à l'interrupteur T2 situé dans le deuxième module M2, les deux circuits étant alors synchronisés pour commander les deux modes de fonctionnement du variateur.

Lorsque le deuxième module est connecté sur le variateur, deux modes de fonctionnement sont possibles, commandés en employant les interrupteurs électroniques T1, T2 du premier bras de commutation et du deuxième bras de commutation.

Dans un premier mode de fonctionnement, l'interrupteur électronique T1 est commandé en modulation (alternance d'ouverture et de fermeture), par exemple par MLI, et l'interrupteur électronique T2 est commandé à l'ouverture de manière à décharger le super-condensateur UC sur le bus continu d'alimentation.

Dans un deuxième mode de fonctionnement, l'interrupteur électronique T1 est commandé à l'ouverture et l'interrupteur électronique T2 est commandé en modulation de manière à transférer l'énergie excédante générée lors du freinage vers le super-condensateur UC.

Pour mettre en place les deux modes de fonctionnement précités, les valeurs de courant luc et/ou de tension Vuc au niveau du super-condensateur UC peuvent bien entendu être mesurées ou estimées.

Bien entendu, d'autres variantes de réalisation peuvent être envisagées, le principe restant de pouvoir utiliser un même bras de commutation et d'y adjoindre un module doté d'une résistance de freinage ou de moyens de stockage et de régénération de l'énergie électrique générée lors du freinage.

Il est bien entendu que l'on peut, sans sortir du cadre de l'invention, imaginer d'autres variantes et perfectionnements de détail et de même envisager l'emploi de moyens équivalents.

## Revendications

1. Variateur (1) de vitesse comportant :
- un bus continu d'alimentation de puissance doté d'une ligne positive (10) et d'une ligne négative (11),
- un condensateur de bus (Cb) connecté entre la ligne positive (10) et la ligne négative (11) du bus continu d'alimentation,
- un module onduleur (13) alimenté par le bus continu d'alimentation et commandé pour délivrer une tension variable à une charge électrique (C),
- un premier bras de commutation (100) connecté entre la ligne positive (10) et la ligne négative (11) du bus et comportant au moins un premier interrupteur électronique (T1),
ledit variateur étant **caractérisé en ce qu'**il comporte également :
- un premier module (M1) comportant une résistance de freinage ou un deuxième module (M2) comportant des moyens de stockage et de régénération de l'énergie électrique générée lors du freinage de la charge électrique (C), **en ce que**
- le premier module et le deuxième module sont amovibles et interchangeables, et **caractérisé en ce que**
- le premier module et le deuxième module se présentent sous la forme d'une cassette venant se connecter d'une part sur le bus continu d'alimentation et d'autre part sur le premier bras de commutation (100).

2. Variateur de vitesse selon la revendication 1, **caractérisé en ce que** le premier bras de commutation (100) comporte une diode (D1) montée en série avec le premier interrupteur électronique (T1) et définissant entre eux un point milieu de connexion (P3).

3. Variateur selon la revendication 2, **caractérisé en ce que** le deuxième module comporte un deuxième bras de commutation (200) et un ou plusieurs super-condensateur(s) (UC).

4. Variateur de vitesse selon la revendication 3, **caractérisé en ce que** le deuxième bras de commutation (200) est connecté en parallèle du premier bras de commutation (100).

5. Variateur de vitesse selon la revendication 4, **caractérisé en ce que** le deuxième bras de commutation comporte un deuxième interrupteur électronique (T2) et une diode (D2) connectés en série et définissant un point milieu de connexion (P4) connecté au point milieu de connexion (P3) du premier bras de commutation (100), ladite diode (D2) du deuxième bras de commutation étant connectée en antiparallèle avec le premier interrupteur électronique (T1) et la diode (D1) du premier bras de commutation étant connectée en antiparallèle du deuxième interrupteur électronique (T2).

6. Variateur de vitesse selon la revendication 4, **caractérisé en ce que** le deuxième module comporte une inductance (L) connectée en série avec le super-condensateur (UC).

7. Variateur de vitesse selon la revendication 2, **caractérisé en ce que** la résistance de freinage (Rf) du premier module (M1) est connectée en parallèle de la diode (D1) du premier bras de commutation (100).

8. Variateur de vitesse selon l'une des revendications 1 à 7, **caractérisé en ce qu'**il comporte des moyens de commande agencés pour fonctionner différemment selon que le premier module (M1) ou le deuxième module (M2) est connecté.

## Patentansprüche

1. Umrichter (1), umfassend:
- einen durchgehenden Leistungsversorgungsbus, der mit einer positiven Leitung (10) und einer negativen Leitung (11) versehen ist,
- einen Buskondensator (Cb), der zwischen die positive Leitung (10) und die negative Leitung (11) des durchgehenden Leistungsversorgungsbusses geschaltet ist,
- ein Invertermodul (13), das von dem durchgehenden Leistungsversorgungsbus versorgt wird und gesteuert wird, um eine variable Spannung an eine elektrische Last (C) zu liefern,
- einen ersten Schaltarm (100), der zwischen die positive Leitung (10) und die negative Leitung (11) des Busses geschaltet ist und mindestens einen ersten elektronischen Schalter (T1) umfasst,
wobei der Umrichter **dadurch gekennzeichnet ist, dass** er auch Folgendes umfasst:
- ein erstes Modul (M1), umfassend einen Bremswiderstand, oder ein zweites Modul (M2), umfassend Mittel zur Speicherung und zur Regeneration der elektrischen Energie, die beim Bremsen der elektrischen Last (C) erzeugt wird, dadurch, dass
- das erste Modul und das zweite Modul abnehmbar und austauschbar sind, und **dadurch gekennzeichnet, dass**
- das erste Modul und das zweite Modul in Form einer Kassette vorliegen, die einerseits mit dem durchgehenden Versorgungsbus und andererseits mit dem ersten Schaltarm (100) verbunden wird.

2. Umrichter nach Anspruch 1, **dadurch gekennzeichnet, dass** der erste Schaltarm (100) eine Diode (D1) umfasst, die mit dem ersten elektronischen Schalter (T1) in Reihe geschaltet ist und zwischen ihnen einen Verbindungsmittelpunkt (P3) definiert.

3. Umrichter nach Anspruch 2, **dadurch gekennzeichnet, dass** das zweite Modul einen zweiten Schaltarm (200) und einen oder mehrere Superkondensatoren (UC) umfasst.

4. Umrichter nach Anspruch 3, **dadurch gekennzeichnet, dass** der zweite Schaltarm (200) mit dem ersten Schaltarm (100) parallel geschaltet ist.

5. Umrichter nach Anspruch 4, **dadurch gekennzeichnet, dass** der zweite Schaltarm einen zweiten elektronischen Schalter (T2) und eine Diode (D2) umfasst, die in Reihe geschaltet sind und einen Verbindungsmittelpunkt (P4) definieren, der mit dem Verbindungsmittelpunkt (P3) des ersten Schaltarms (100) verbunden ist, wobei die Diode (D2) des zweiten Schaltarms antiparallel zum ersten elektronischen Schalter (T1) und die Diode (D1) des ersten Schaltarms antiparallel zum zweiten elektronischen Schalter (T2) geschaltet ist.

6. Umrichter nach Anspruch 4, **dadurch gekennzeichnet, dass** das zweite Modul eine Induktivität (L) umfasst, die mit dem Superkondensator (UC) in Reihe geschaltet ist.

7. Umrichter nach Anspruch 2, **dadurch gekennzeichnet, dass** der Bremswiderstand (Rf) des ersten Moduls (M1) mit der Diode (D1) des ersten Schaltarms (100) parallel geschaltet ist.

8. Umrichter nach einem der Ansprüche 1 bis 7, **dadurch gekennzeichnet, dass** er Steuerungsmittel umfasst, die angeordnet sind, unterschiedlich zu wirken, in Abhängigkeit davon, ob das erste Modul (M1) oder das zweite Modul (M2) verbunden ist.

## Claims

1. A variable-speed drive (1) comprising:
- a DC power supply bus provided with a positive line (10) and a negative line (11),
- a bus capacitor (Cb) connected between the positive line (10) and the negative line (11) of the DC power supply bus,
- an inverter module (13) powered by the DC power supply bus and controlled to deliver a variable voltage to an electrical load (C),
- a first switching leg (100) connected between the positive line (10) and the negative line (11) of the bus and comprising at least one first electronic switch (T1),
said variable-speed drive being **characterized in that** it also comprises:
- a first module (M1) comprising a braking resistor or a second module (M2) comprising means for storing and regenerating electrical energy generated during the braking of the electrical load (C), **in that**
- the first module and the second module are removable and interchangeable,
and **characterized in that**
- the first module and the second module take the form of a cassette that connects on the one hand to the DC power supply bus and on the other hand to the first switching leg (100).

2. The variable-speed drive as claimed in claim 1, **characterized in that** the first switching leg (100) comprises a diode (D1) mounted in series with the first electronic switch (T1) and defining between them a connection mid-point (P3).

3. The variable-speed drive as claimed in claim 2, **characterized in that** the second module comprises a second switching leg (200) and one or more supercapacitors (UC).

4. The variable-speed drive as claimed in claim 3, **characterized in that** the second switching leg (200) is connected in parallel with the first switching leg (100) .

5. The variable-speed drive as claimed in claim 4, **characterized in that** the second switching leg comprises a second electronic switch (T2) and a diode (D2) connected in series and defining a connection mid-point (P4) connected to the connection mid-point (P3) of the first switching leg (100), said diode (D2) of the second switching leg being connected in antiparallel with the first electronic switch (T1) and the diode (D1) of the first switching leg being connected in antiparallel with the second electronic switch (T2).

6. The variable-speed drive as claimed in claim 4, **characterized in that** the second module comprises an inductor (L) connected in series with the supercapacitor (UC).

7. The variable-speed drive as claimed in claim 2, **characterized in that** the braking resistor (Rf) of the first module (M1) is connected in parallel with the diode (D1) of the first switching leg (100).

8. The variable-speed drive as claimed in one of claims 1 to 7, **characterized in that** it comprises control means arranged to operate differently depending on whether the first module (M1) or the second module (M2) is connected.
